# EUROPEAN PATENT APPLICATION

(11) **EP 3 838 456 A1**
(43) Date of publication of application: **23.06.2021**
(21) Application number: 19218649.2
(22) Date of filing: 20.12.2019
(51) Int. Cl.: B23B 29/04, B23B 31/26

(54) **CLAMPING DEVICE FOR TOOL HOLDER**

(71) Applicant: AB Sandvik Coromant, 811 81 Sandviken (SE)
(72) Inventor: Wästerlund, Jonas, Ichinomiya-cho Toyokawa, 441-1231 (JP); MÄTLIK, Gunnar, SE-802 80 Gävle (SE)
(74) Representative: Sandvik

(57) **Abstract**

A clamping device for releasably holding a tool holder shank (61), comprising:
- a housing (2);
- a drawbar (5) axially moveable in a bore (3) in the housing between an advanced releasing position and a retracted locking position;
- engagement members (20) moveable under the effect of the drawbar into locking engagement with the tool holder shank; and
- a cam shaft (30) extending through an aperture (14) in the drawbar and rotatable under the effect of a hydraulic actuator (40) in order to move the drawbar axially in the bore.

The hydraulic actuator comprises actuator shaft (41) connected to the cam shaft and an actuator vane (42) fixed to the actuator shaft. The actuator vane is hydraulically moveable in an internal space (43) of the hydraulic actuator in order effect rotation of the actuator shaft and cam shaft and thereby an axial movement of the drawbar in the bore.

## Description

### FIELD OF THE INVENTION AND PRIOR ART

The present invention relates to a clamping device according to the preamble of claim 1, which is intended to be used for connecting a tool holder to a machine tool.

Within the field of machine tools for metal cutting, a cutting tool, for instance in the form of a lathe tool, used for machining work pieces of metallic material is often fixed to a tool holder, which in its turn may be detachably fixed to a clamping device that is mounted to a machine tool. It is previously known to clamp a shank of such a tool holder to the housing of a clamping device by means of a clamping mechanism arranged in the housing. When the cutting tool needs to be exchanged, the tool holder is released from the housing of the clamping device and a new tool holder with another cutting tool is clamped to the housing. A clamping device of this type may for instance be detachably fixed at the periphery of a tool turret included in a machine tool.

Many previously known clamping devices of the above-mentioned type require manual operation in order to effect clamping or releasing of a tool holder. There also exist clamping devices adapted for automatic tool changing operations, where for instance a hydraulic piston is used for controlling the state of the clamping mechanism. However, such automatically operated clamping mechanisms are normally rather bulky and require much space, particularly in a longitudinal direction, which make them unsuitable for use with a tool turret of a machine tool where the available axial space for the clamping device is limited.

EP 2 987 573 A1 discloses a relatively compact clamping device with a cam shaft that extends through an aperture in a drawbar, wherein the cam shaft, when rotated, is configured to provide an axial displacement of the drawbar in order to effect clamping or release of a tool holder. However, this previously known clamping device requires manual operation and is not adapted for automatic tool changing operations. Similar types of clamping devices with a manually actuated cam shaft rotatably received in an aperture in a drawbar are also disclosed in EP 2 987 575 A1 and US 9 839 965 B2.

### OBJECT OF THE INVENTION

The object of the present invention is to provide a clamping device of the above-mentioned type that has a new and favourable design and that is suitable for use with a tool turret of a machine tool.

### SUMMARY OF THE INVENTION

According to the invention, said object is achieved by means of a clamping device having the features defined in claim 1.

The clamping device according to the invention comprises:
- a housing having a front end, a rear end and a bore which intersects the front end and extends rearwardly therefrom, wherein a mounting portion for receiving the tool holder shank is provided at a front end of the bore;
- a drawbar slidably mounted inside the bore so as to be reciprocally moveable in the bore along a longitudinal axis thereof between an advanced releasing position and a retracted locking position, wherein an aperture extends through the drawbar in a rear portion thereof and transversally to a longitudinal axis of the drawbar;
- engagement members arranged around the drawbar at a front end thereof, wherein the engagement members, under the effect of a movement of the drawbar from the advanced releasing position to the retracted locking position, are moveable from a first position, in which the engagement members allow the tool holder shank to move into and out of said mounting portion of the bore, to a second position, in which the engagement members are in locking engagement with the tool holder shank and keep it secured to the housing;
- a cam shaft extending through said aperture in the drawbar and provided with at least one cam formation, wherein the cam shaft is rotatable in relation to the housing and configured to effect an axial displacement of the drawbar in relation to the housing by the action of said cam formation when rotated in relation to the housing, the drawbar being moveable from the advanced releasing position to the retracted locking position by rotation of the cam shaft in a first rotary direction and from the retracted locking position to the advanced releasing position by rotation of the cam shaft in an opposite second rotary direction; and
- a hydraulic actuator arranged in or mounted on the housing and configured to rotate the cam shaft in relation to the housing, wherein the hydraulic actuator comprises:
   - a rotatable actuator shaft, and
   - at least one actuator vane, which is fixed to the actuator shaft and moveably received in an internal space of the hydraulic actuator, wherein the actuator vane is configured to divide this internal space into a first hydraulic chamber on a first side of the actuator vane and a second hydraulic chamber on an opposite second side of the actuator vane.

The actuator shaft is connected to the cam shaft in order to allow transmission of torque from the actuator shaft to the cam shaft. The cam shaft is rotatable together with the actuator shaft and the actuator vane in said first rotary direction by feeding of hydraulic fluid into the first hydraulic chamber and in said second rotary direction by feeding of hydraulic fluid into the second hydraulic chamber.

The hydraulic actuator included in the clamping device of the present invention is designed for arrangement at the side of the drawbar. By controlling the axial movement of the drawbar by means of a hydraulic actuator located at the side of the drawbar, no actuator that takes up space in the axial direction is required for controlling the axial movement of the drawbar, which implies that the clamping device can be made compact in axial direction. The clamping device is therefore suitable for use in tool turrets. Furthermore, the use of a hydraulic actuator for rotating the cam shaft, and thereby achieving a movement of the drawbar, implies that the clamping device according to the invention is suitable for use in automatic tool changing operations.

The clamping device according to the present invention may be mounted to a tool turret of a machine tool. However, the clamping device is not limited to use in a tool turret. On the contrary, the clamping device could be mounted to a machine tool without any intermediate tool turret.

According to an embodiment of the invention, the cam shaft is configured to assume a self-locking rotary position in relation to the housing when the drawbar has been forced into the retracted locking position under the effect of the cam shaft and the hydraulic actuator, so as to thereby keep the drawbar in the retracted locking position. Hereby, the cam shaft is capable of keeping the drawbar in the retracted locking position without requiring any torque from the hydraulic actuator, which implies that the actuator vane only needs to exert torque on the actuator shaft and the cam shaft in connection with a tool changing operation.

Another embodiment of the invention is characterized in:
- that the hydraulic actuator comprises a cylindrical cavity, which extends perpendicularly to the longitudinal axis of the bore and which is limited in radial direction outwards by a cylindrical wall, wherein said internal space forms part of this cylindrical cavity;
- that the actuator shaft is rotatably arranged in the cylindrical cavity with its longitudinal axis coinciding with the centre axis of the cylindrical cavity;
- that a longitudinal outer edge of the actuator vane is in contact with the cylindrical wall; and
- that said internal space extends in the circumferential direction of the cylindrical cavity between first and second chamber walls, which are arranged inside the cylindrical cavity and extend in the longitudinal direction thereof, wherein the first hydraulic chamber is limited in a circumferential direction of the cylindrical cavity by the first chamber wall and the second hydraulic chamber is limited in a circumferential direction of the cylindrical cavity by the second chamber wall.
With this design, the hydraulic actuator can be constructed in a space-saving manner while still making it possible to provide rather large effective pressure areas on the opposite sides of the actuator vane. Furthermore, the available space for the actuator vane, and thereby the size of the actuator vane and the effective pressure areas thereon, may easily be adapted in dependence on the torque required for actuating the cam shaft by designing the cylindrical cavity with a suitable axial length and a suitable diameter.

According to another embodiment of the invention, said first and second chamber walls form part of an elongated partition element, preferably in the form of a solid body, which is mounted inside the cylindrical cavity and extends along a part of the cylindrical cavity in the longitudinal direction thereof, wherein this partition element is fixed to the cylindrical wall. The partition element defines the boundaries for the first and second hydraulic chambers in the circumferential direction of the cylindrical cavity. The size of the internal space comprising the first and second hydraulic chambers may easily be adapted as desired by varying the size of the partition element. The partition element is with advantage fixed to the cylindrical wall by means of screws, which facilitates the assembly of the hydraulic actuator.

Another embodiment of the invention is characterized in:
- that the actuator shaft is provided with a first end piece formed as a radial protrusion at a first end of the actuator shaft facing the cam shaft and a second end piece formed as a radial protrusion at an opposite second end of the actuator shaft, wherein the first and second hydraulic chambers are limited in a first axial direction by the first end piece and in an opposite second axial direction by the second end piece;
- that the actuator vane extends along the actuator shaft between the first and second end pieces; and
- that the actuator shaft is rotatably mounted to the cylindrical wall through the first and second end pieces.
In this case, the first and second end pieces are used as end walls for the hydraulic chambers of the hydraulic actuator and also as bearing members for the actuator shaft. Hereby, the number of separate components included in the hydraulic actuator is reduced, which facilitates the assembly of the hydraulic actuator and makes it possible to manufacture it in a simple and cost-efficient manner.

Further advantageous features of the clamping device according to the present invention will appear from the description following below and the dependent claims.

### BRIEF DESCRIPTION OF THE DRAWINGS

With reference to the appended drawings, a specific description of embodiments of the invention cited as examples follows below. In the drawings:
- Fig 1: is a perspective view of a clamping device according to an embodiment of the present invention and a tool holder, as seen with the tool holder detached from the clamping device,
- Fig 2: is a partly cut perspective view of the clamping device of Fig 1,
- Fig 3: is an exploded view of the clamping device and tool holder of Fig 1,
- Fig 4: is an exploded view from another direction of the clamping device and tool holder of Fig 1,
- Fig 5: is a longitudinal section through the clamping device and tool holder of Fig 1, with the drawbar of the clamping device shown in a retracted locking position,
- Fig 6: is a cut according to the line VI-VI in Fig 5,
- Fig 7: is a cut according to the line VII-VII in Fig 5,
- Fig 8: is a longitudinal section corresponding to Fig 5, with the drawbar shown in an advanced releasing position,
- Fig 9: is a cut according to the line IX-IX in Fig 8, and
- Fig 10: is a cut according to the line X-X in Fig 8.

### DETAILED DESCRIPTION OF EMBODIMENTS OF THE INVENTION

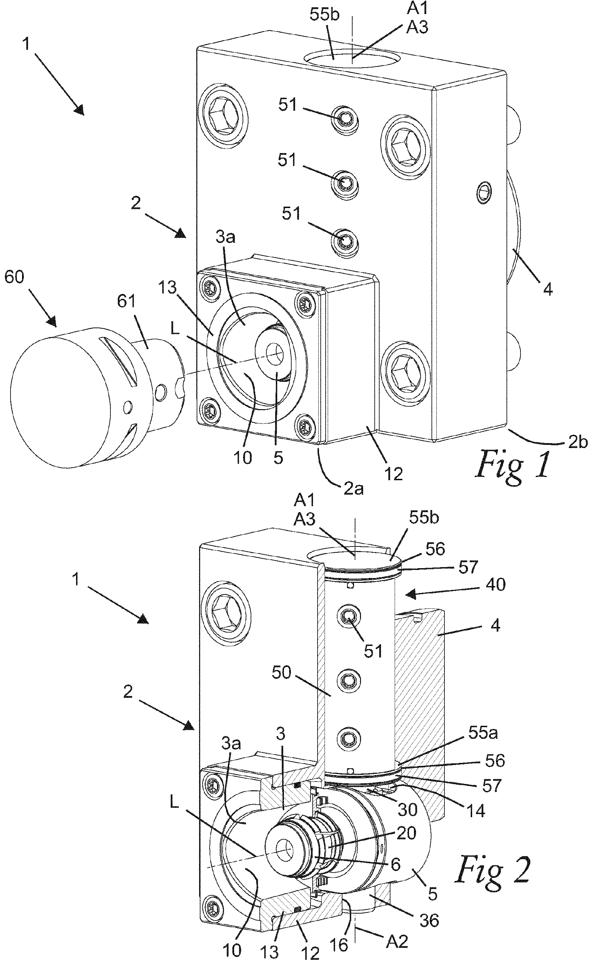

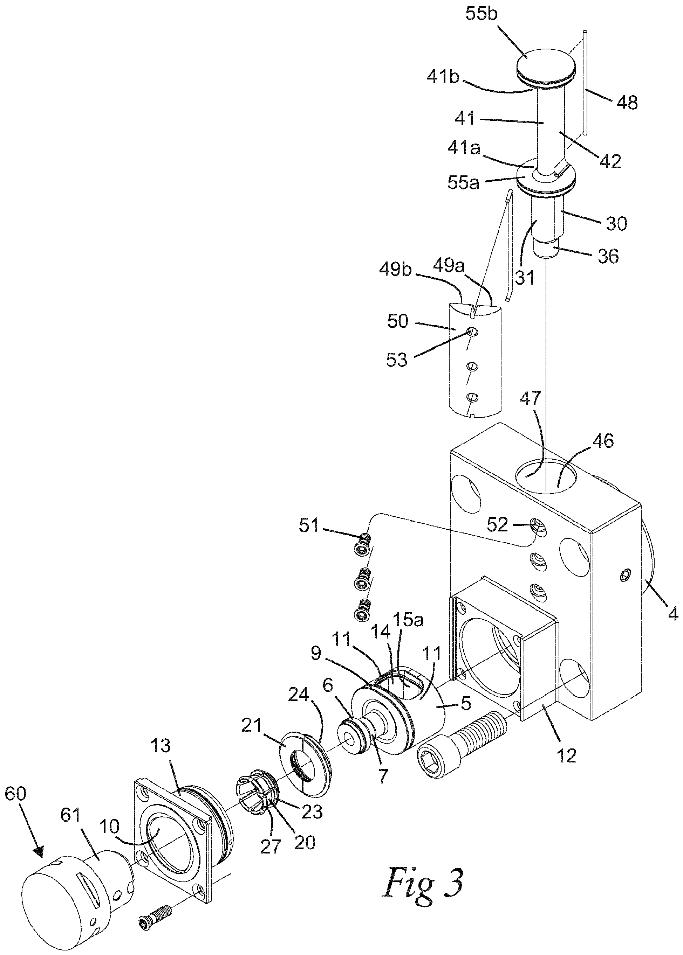

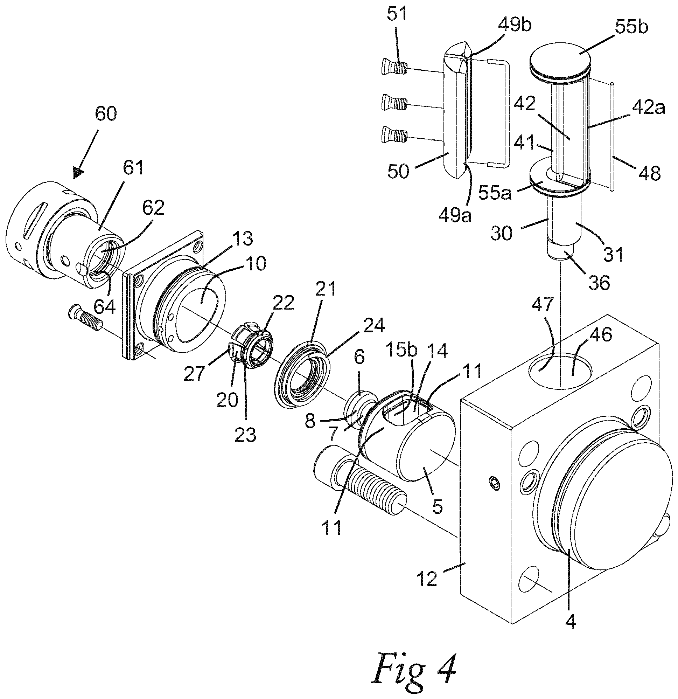

A clamping device 1 according to an embodiment of the present invention is illustrated in Figs 1-10. The clamping device 1 is configured to releasably clamp a tool holder 60 (very schematically illustrated in the drawings) to a housing 2 of the clamping device and enable the machining of a work piece by means of a cutting tool (not shown) fixed to the tool holder 60. The cutting tool may for instance be a lathe tool.

The housing 2 has a front end 2a, a rear end 2b and a bore 3 which intersects the front end 2a and extends rearwardly therefrom. Thus, the bore 3 has an entrance opening 3a at the front end 2a of the housing. The housing 2 is connectable to a tool turret of a machine tool via a connection member 4, which extends from the housing 2 at the rear end thereof.

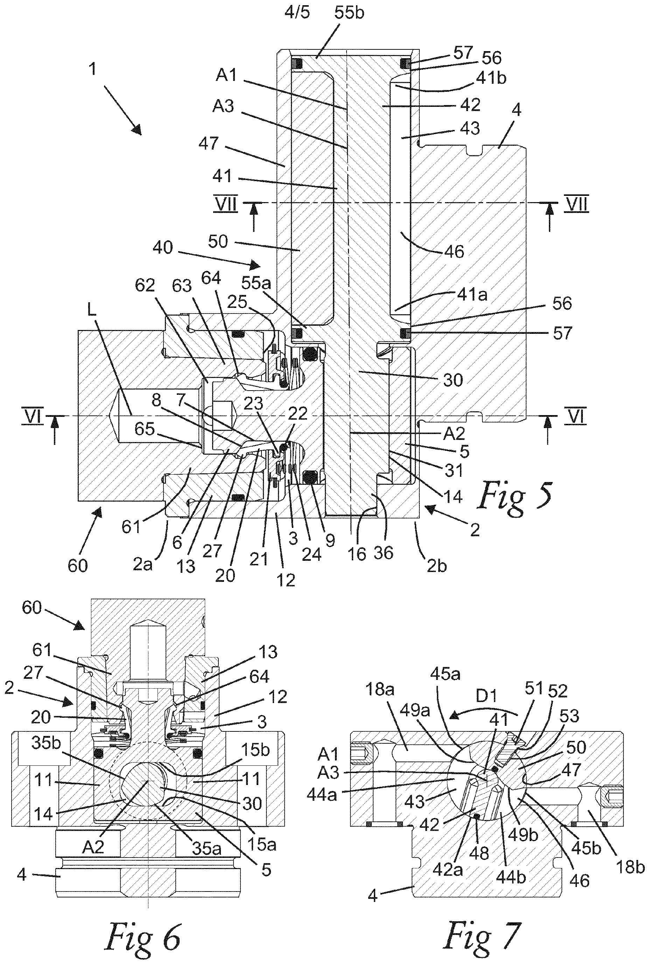

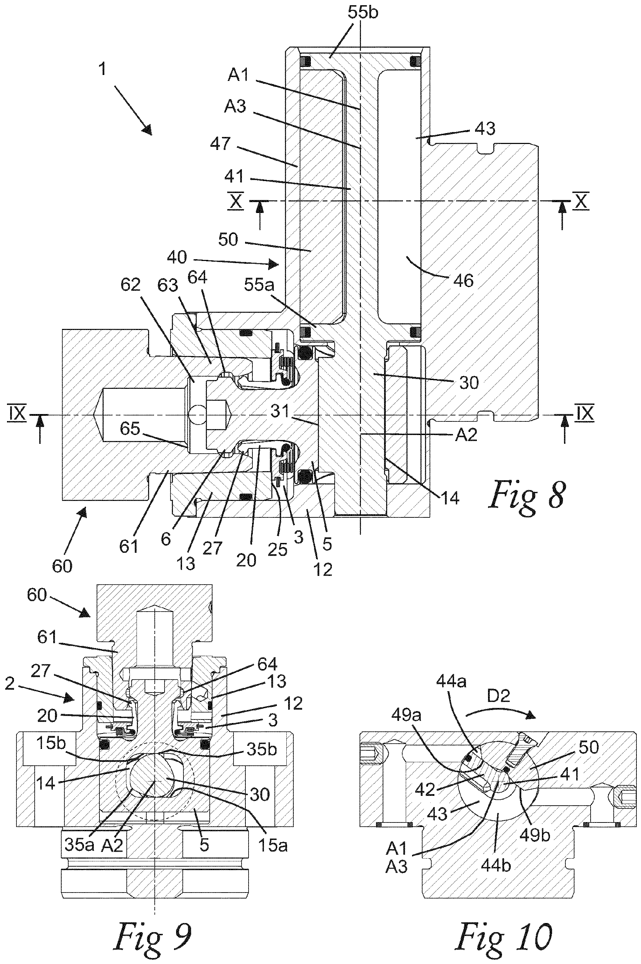

A drawbar 5 is slidably mounted inside the bore 3 so as to be reciprocally moveable in the bore 3 along a longitudinal axis L thereof between an advanced releasing position (see Figs 8 and 9) and a retracted locking position (see Figs 5 and 6). The drawbar 5 has a front end facing the entrance opening 3a of the bore 3 and an opposite rear end. A head portion 6 and a neck portion 7 are provided at the front end of the drawbar 5. The head portion 6 is located in front of the neck portion 7 as seen in the longitudinal direction of the drawbar, wherein the head portion 6 is connected to the neck portion 7 via a rearwardly facing bevelled surface 8 on the head portion 6. A sealing ring 9 is arranged between the drawbar 5 and an inner surface of the bore 3. In the illustrated example, this sealing ring 9 is received in a groove on the outer side of the drawbar 5.

A mounting portion 10 for receiving a mounting shank 61 on the tool holder 60 is provided at a front end of the bore 3. This mounting shank 61 is here referred to as tool holder shank.

In the illustrated embodiment, the housing 2 comprises a base part 12 and an end piece 13 mounted to the base part 12 at the front end 2a of the housing. The end piece 13 has the form of a sleeve with an axial through hole that forms part of the above-mentioned bore 3. In this case, the above-mentioned mounting portion 10 is located in the through hole of the end piece 13. As an alternative, the part of the housing 2 accommodating the bore 3 could be formed in one piece without any end piece of the above-mentioned type.

The tool holder shank 61 is insertable into the mounting portion 10 of the bore 3 via the entrance opening 3a at the front end 2a of the housing 2. The head portion 6 of the drawbar is received in an engagement bore 62 in the tool holder shank 61 and a tubular wall 63 of the tool holder shank is received in a space between the head portion 6 and an inner surface of the end piece 13. In the illustrated embodiments, the mounting portion 10 is conically shaped and has a somewhat "triangular" or polygonal, non-circular cross-sectional shape adapted to receive a similarly shaped tool holder shank 61. The conical shape ensures a connection free from play in the radial as well as the axial direction between the tool holder shank 61 and the housing 2, whereas the non-circular cross-section ensures a non-rotatable fixation of the tool holder shank 61 to the housing 2. However, the mounting portion 10 could also have any other suitable shape for receiving other types of tool holder shanks.

Engagement members 20 in the form of segments are arranged around the drawbar 5 at a front end thereof. Under the effect of a movement of the drawbar 5 from the advanced releasing position to the retracted locking position, the engagement members 20 are moveable from a first position (see Figs 8 and 9), in which the engagement members 20 allow the tool holder shank 61 to move into and out of the mounting portion 10 of the bore 3, to a second position (see Figs 5 and 6), in which the engagement members 20 are in locking engagement with an engagement groove 64 in the engagement bore 62 in the tool holder shank 61 and thereby keep the tool holder shank 61 secured to the housing 2.

In the illustrated embodiment, the engagement members 20 are arranged around the neck portion 7 of the drawbar 5 and held in place around the neck portion by means of a retainer ring 21 and an elastic O-ring 22, which are arranged in the bore 3 and surround the neck portion 7. Each engagement member 20 has an outwardly facing flange portion 23 engaged in an inner groove in the retainer ring 21. The O-ring 22 is received in an outwardly facing groove at the rear end of each engagement member 20. A compression spring 24 is also arranged in the bore 3 and configured to surround the drawbar 5. The compression spring 24 is mounted between a shoulder on the drawbar 5 and the retainer ring 21 and it is configured to urge the retainer ring 21 and the engagement members 20 forwards. The forward movement of the retainer ring 21 towards the entrance opening of the bore 3 is limited by a shoulder 25 provided in the bore 3. In the illustrated example, this shoulder 25 is formed by a rearwardly facing end surface of the end piece 13.

At its front end, each engagement member 20 is provided with an outwardly directed engagement flange 27, which is configured to be in engagement with the engagement groove 64 in the tool holder shank 61 when the engagement member 20 is in the above-mentioned second position. When the drawbar 5 is in the advanced releasing position, the front ends of the engagement members 20 are located behind the head portion 6 of the drawbar 5 and the engagement flanges 27 are out of engagement with the engagement groove 64 in the tool holder shank 61, as illustrated in Figs 8 and 9. When the drawbar 5 is moved axially rearwards in the bore 3 along the longitudinal axis L thereof, the bevelled surface 8 on the head portion 6 of the drawbar will come into contact with the front ends of the engagement members 20, wherein the front ends of the engagement members 20 will slide on this bevelled surface 8 and be pressed outwards so that the engagement flanges 27 on the engagement members come into engagement with the engagement groove 64 in the tool holder shank 61, whereupon the tool holder shank 61 will be pulled by the drawbar 5 into firm contact with inner surfaces of the end piece 13 at the above-mentioned mounting portion 10.

An aperture 14 extends through the drawbar 5 in a rear portion thereof and transversally to a longitudinal axis of the drawbar. The aperture 14 has the form of a through hole in the drawbar 5 and the centre axis of the aperture intersects the longitudinal axis of the drawbar in a direction perpendicular to this longitudinal axis. The clamping device 1 comprises a cam shaft 30, which extends through this aperture 14 in the drawbar and which is provided with at least one cam formation 31. The cam shaft 30 is rotatable in relation to the housing 2 and configured to effect an axial displacement of the drawbar 5 in relation to the housing 2 by the action of said cam formation 31 when the cam shaft is rotated in relation to the housing 2, wherein the drawbar 5 is moveable from the advanced releasing position to the retracted locking position by rotation of the cam shaft 30 in a first rotary direction D1 and from the retracted locking position to the advanced releasing position by rotation of the cam shaft 30 in an opposite second rotary direction D2.

The rear portion of the drawbar 5 through which the aperture 14 extends preferably has an oval or essentially rectangular cross-sectional shape, wherein the aperture 14 extends through the rear portion of the drawbar between the two longer sides thereof. Hereby, the two leg sections 11 formed in the rear portion of the drawbar on opposite sides of the aperture 14 may be formed with a comparatively large cross-sectional area that will give them sufficient strength to withstand the large forces that the drawbar 5 is subjected to during clamping of a tool holder.

In the illustrated embodiment, the cam formation 31 on the cam shaft 30 comprises a first cam surface 35a (see Figs 6 and 9) operable to move the drawbar 5 from the advanced releasing position to the retracted locking position in connection with a rotation of the cam shaft 30 in the first rotary direction D1 and a second cam surface 35b operable to move the drawbar 5 from the retracted locking position to the advanced releasing position in connection with a rotation of the cam shaft 30 in the second rotary direction D2. In this case, the aperture 14 in the drawbar has a first contact surface 15a facing towards the front end of the drawbar 5 and a second contact surface 15b facing towards the rear end of the drawbar. The first cam surface 35a is configured to be pressed against said first contact surface 15a in the aperture when the cam shaft 30 is rotated in the first rotary direction D1, to thereby pull the drawbar 5 rearwards in the bore 3 from the advanced releasing position to the retracted locking position. The second cam surface 35b is configured to be pressed against said second contact surface 15b in the aperture when the cam shaft 30 is rotated in the second rotary direction D2, to thereby push the drawbar 5 forwards in the bore 3 from the retracted locking position to the advanced releasing position.

As an alternative to a single cam formation 31 with such first and second cam surfaces 35a, 35b, the cam shaft 30 could comprise two identical cam formations spaced apart in the axial direction of the cam shaft by an intermediate recess, as described in closer detail in US 9 839 965 B2.

Furthermore, as an alternative to or in combination with a cam formation having cam surfaces configured to co-operate with associated contact surfaces in the aperture 14 in the drawbar, the cam shaft 30 could be provided with cam formations having cam surfaces configured to co-operate with associated contact surfaces provided in seating apertures in the housing on opposite sides of the drawbar, as described in closer detail in EP 2 987 573 A1 and EP 2 987 575 A1.

The clamping device 1 further comprises a hydraulic actuator 40 arranged in or mounted on the housing 2 and configured to rotate the cam shaft 30 in relation to the housing 2. In the illustrated embodiment, the hydraulic actuator 40 is integrated in the housing 2 of the clamping device. However, the hydraulic actuator 40 may as an alternative comprise a separate actuator casing that is fixed to the housing of clamping device.

The hydraulic actuator 40 comprises a rotatable actuator shaft 41, which is connected to the cam shaft 30 in order to allow transmission of torque from the actuator shaft 41 to the cam shaft 30. The actuator shaft 41 is arranged with its axis of rotation A1 in alignment with the axis of rotation A2 of the cam shaft 30, and the cam shaft 30 is configured to be rotatable together with the actuator shaft 41 in the above-mentioned first and second rotary directions D1, D2. In the illustrated embodiment, the actuator shaft 41 and the cam shaft 30 are formed in one piece. However, the actuator shaft 41 and the cam shaft 30 may as an alternative constitute separate components which are rigidly connected to each other, for instance by means of a threaded joint, so as to be jointly rotatable.

The hydraulic actuator 40 also comprises an actuator vane 42, which is fixed to the actuator shaft 41 and configured to be rotatable together with the actuator shaft 41 about the axis of rotation A1 of the actuator shaft. The actuator vane 42 is moveably received in an internal space 43 of the hydraulic actuator 40 and configured to divide this internal space 43 into a first hydraulic chamber 44a (see Figs 7 and 10) on a first side of the actuator vane and a second hydraulic chamber 44b on an opposite second side of the actuator vane. Hydraulic fluid, for instance in the form of hydraulic oil, can be fed into and discharged from the first hydraulic chamber 44a through a first inlet and outlet port 45a and fed into and discharged from the second hydraulic chamber 44b through a second inlet and outlet port 45b. The first hydraulic chamber 44a is hydraulically connected to a first hydraulic channel 18a in the housing 2 via the first inlet and outlet port 45a and the second hydraulic chamber 44b is hydraulically connected to a second hydraulic channel 18b in the housing 2 via the second inlet and outlet port 45b. The cam shaft 30 is rotatable together with the actuator shaft 41 and the actuator vane 42 in the first rotary direction D1 by feeding of hydraulic fluid into the first hydraulic chamber 44a via the first hydraulic channel 18a and the first inlet and outlet port 45a and in the second rotary direction D2 by feeding of hydraulic fluid into the second hydraulic chamber 44b via the second hydraulic channel 18b and the second inlet and outlet port 45b.

The actuator vane 42 projects in radial direction from the actuator shaft 41. The actuator vane 42 and the actuator shaft 41 are preferably formed in one piece.

In the illustrated embodiment, the hydraulic actuator 40 comprises a cylindrical cavity 46, which extends perpendicularly to the longitudinal axis L of the bore 3 and which is limited in radial direction outwards by a cylindrical wall 47, wherein the above-mentioned internal space 43 forms part of this cylindrical cavity 46. The actuator shaft 41 is rotatably arranged in the cylindrical cavity 46 with its longitudinal axis coinciding with the centre axis A3 of the cylindrical cavity. A longitudinal outer edge 42a of the actuator vane 42 is in contact with the cylindrical wall 47. If so desired, an elongated sealing member 48 may be arranged along the longitudinal outer edge 42a of the actuator vane 42 in order to form a fluid-tight seal at the interface between the actuator vane 42 and the cylindrical wall 47 and thereby prevent hydraulic fluid from leaking from one hydraulic chamber to the other through this interface. However, a smaller leakage of hydraulic fluid between the hydraulic chambers 44a, 44b may be accepted without impairing the functionality of the hydraulic actuator 40, and said sealing member 48 is therefore not necessary.

The internal space 43 accommodating the actuator vane 42 extends in the circumferential direction of the cylindrical cavity 46 between first and second chamber walls 49a, 49b, which are arranged inside the cylindrical cavity 46 and extend in the longitudinal direction thereof along the hydraulic chambers 44a, 44b. The first chamber wall 49a faces the first hydraulic chamber 44a and is configured to limit this hydraulic chamber 44a in a circumferential direction of the cylindrical cavity 46. The second chamber wall 49b faces the second hydraulic chamber 44b and is configured to limit this hydraulic chamber 44b in a circumferential direction of the cylindrical cavity 46. The actuator vane 42 is configured to come into contact with the first chamber wall 49a when the drawbar 5 has reached the advanced releasing position, as illustrated in Figs 8 and 10, to thereby prevent further movement of the drawbar 5 towards the entrance opening 3a of the bore 3. The precise axial position of the drawbar 5 in the bore 3 when it has assumed the retracted locking position depends on the tolerances of the tool holder shank 61 and the mounting portion 10 and it is therefore not possible to predict the precise end position of the actuator vane 42 in the first rotary direction D1. Thus, the actuator vane 42 can not be configured to reach the second chamber wall 49b when the drawbar 5 assumes its retracted locking position. The actuator vane 42 is therefore configured to assume a position somewhere between the first and second chamber walls 49a, 49b when the drawbar 5 has reached the retracted locking position, as illustrated in Figs 5 and 7.

The first and second chamber walls 49a, 49b are with advantage configured to form part of an elongated partition element 50, preferably in the form of a solid body, which is mounted inside the cylindrical cavity 46 and extends along a part of the cylindrical cavity 46 in the longitudinal direction thereof. This partition element 50 is fixed to the cylindrical wall 47, for instance by means of screws 51. In the illustrated example, each such screw 51 extends through a hole 52 in the housing 2 and is engaged in a threaded screw hole 53 in the partition element 50.

In the illustrated embodiment, the actuator shaft 41 is provided with a first end piece 55a formed as a radial protrusion at a first end 41a of the actuator shaft facing the cam shaft 30 and a second end piece 55b formed as a radial protrusion at the opposite second end 41b of the actuator shaft. The first end piece 55a limits the first and second hydraulic chambers 44a, 44b in a first axial direction towards the cam shaft 30 and the second end piece 55b limits the first and second hydraulic chambers 44a, 44b in the opposite axial direction. The actuator vane 42 extends along the actuator shaft 41 between the first and second end pieces 55a, 55b on one side of the actuator shaft.

The actuator shaft 41 is with advantage rotatably mounted to the cylindrical wall 47 through the first and second end pieces 55a, 55b, wherein each one of these end pieces 55a, 55b has a circular peripheral edge 56 arranged in fluid-tight contact with the cylindrical wall 47. A rotary seal 57 is provided between the peripheral edge 56 of each end piece 55a, 55b and the cylindrical wall 47 in order to prevent hydraulic fluid from leaking out of the first and second hydraulic chambers 44a, 44b through the interface between any of these end pieces 55a, 55b and the cylindrical wall 47.

In the illustrated embodiment, the above-mentioned first end piece 55a also functions as a bearing for the end of the cam shaft 30 that faces the actuator shaft 41. The other end of the cam shaft 30 is provided with a bearing portion 36, which has a circular cross-sectional shape and is rotatably received in a seating aperture 16 in the housing 2. The seating aperture 16 has a circular cross-sectional shape corresponding to the cross-sectional shape of the bearing portion 36. The outer surface of the bearing portion 36 is in rotatable contact with the inner surface of the seating aperture 16, wherein these mutual contact surfaces form a bearing for the end of the cam shaft 30 that faces away from the actuator shaft 41.

The cam shaft 30 is preferably configured to assume a self-locking rotary position in relation to the housing 2 when the drawbar 5 has been forced into the retracted locking position under the effect of the cam shaft 30 and the hydraulic actuator 40, so as to thereby keep the drawbar 5 in the retracted locking position. Hereby, the hydraulic actuator 40 only needs to exert torque on the cam shaft 30 in connection with a tool changing operation when the drawbar 5 is to be moved from the retracted locking position to the advanced releasing position and then back to the retracted locking position. In the self-locking rotary position, frictional forces between the first cam surface 35a and the associated contact surface 15a prevent the cam shaft 30 from being rotated in the above-mentioned second rotary direction D2.

In the illustrated embodiment, the hydraulic actuator 40 comprises one single actuator vane 42. However, the hydraulic actuator may as an alternative comprise two or more actuator vanes 42 of the type described above evenly distributed about the actuator shaft 41, wherein each such actuator vane is moveably received in a respective internal space of the hydraulic actuator.

As a further alternative, the clamping device 1 may comprise two hydraulic actuators 40 of the type described above arranged on opposite sides of the drawbar 5, wherein a first one of these hydraulic actuators is connected to the cam shaft 30 at a first end of the cam shaft and the other hydraulic actuator is connected to the cam shaft 30 at an opposite second end of the cam shaft.

When a tool holder 60 is to be clamped to the housing 2, the tool holder shank 61 is inserted into the mounting portion 10 of the bore 3 with the drawbar 5 positioned in the advanced releasing position. Hereby, the head portion 6 of the drawbar is received in the engagement bore 62 in the tool holder shank 61 and the engagement groove 64 in the tool holder shank 61 is positioned on the outside of the engagement flanges 27 of the engagement members 20. Thereupon, hydraulic fluid is fed into the first hydraulic chamber 44a in order to rotate the actuator shaft 41 in the first rotary direction D1 and thereby achieve a corresponding rotary movement of the cam shaft 30. When the cam shaft 30 is rotated in the first rotary direction D1, the first cam surface 35a on the cam shaft is pressed against the first contact surface 15a in the aperture 14 in the drawbar 5, which will force the drawbar 5 to move rearwards in the bore 3 into the retracted locking position while pulling the tool holder shank 61 into firm engagement with the housing 2.

When a tool changing operation is to be performed and the tool holder 60 is to be released from the housing 2, hydraulic fluid is fed into the second hydraulic chamber 44b in order to rotate the actuator shaft 41 in the second rotary direction D2 and thereby achieve a corresponding rotary movement of the cam shaft 30. When the cam shaft 30 is rotated in the second rotary direction D2, the second cam surface 35b on the cam shaft is pressed against the second contact surface 15b in the aperture 14 in the drawbar 5, which will force the drawbar 5 to move forwards in the bore 3 towards the advanced releasing position. When the drawbar 5 is moved towards the advanced releasing position, the outer end of the head portion 6 of the drawbar 5 will hit against a surface 65 in the engagement bore 62 in the tool holder shank 61 and thereby release the tool holder shank 61 from the housing 2.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A clamping device for releasably holding a tool holder shank, the clamping device (1) comprising:
- a housing (2) having a front end (2a), a rear end (2b) and a bore (3) which intersects the front end and extends rearwardly therefrom, wherein a mounting portion (10) for receiving the tool holder shank (61) is provided at a front end of the bore (3);
- a drawbar (5) slidably mounted inside the bore (3) so as to be reciprocally moveable in the bore along a longitudinal axis (L) thereof between an advanced releasing position and a retracted locking position, wherein an aperture (14) extends through the drawbar (5) in a rear portion thereof and transversally to a longitudinal axis of the drawbar (5);
- engagement members (20) arranged around the drawbar (5) at a front end thereof, wherein the engagement members (20), under the effect of a movement of the drawbar (5) from the advanced releasing position to the retracted locking position, are moveable from a first position, in which the engagement members (20) allow the tool holder shank (61) to move into and out of said mounting portion (10), to a second position, in which the engagement members (20) are in locking engagement with the tool holder shank (61) and keep it secured to the housing (2); and
- a cam shaft (30) extending through said aperture (14) in the drawbar (5) and provided with at least one cam formation (31), wherein the cam shaft (30) is rotatable in relation to the housing (2) and configured to effect an axial displacement of the drawbar (5) in relation to the housing (2) by the action of said cam formation (31) when rotated in relation to the housing (2), the drawbar (5) being moveable from the advanced releasing position to the retracted locking position by rotation of the cam shaft (30) in a first rotary direction (D1) and from the retracted locking position to the advanced releasing position by rotation of the cam shaft (30) in an opposite second rotary direction (D2),
**characterized in:**
- **that** the clamping device (1) comprises a hydraulic actuator (40) arranged in or mounted on the housing (2) and configured to rotate the cam shaft (30) in relation to the housing (2), wherein the hydraulic actuator (40) comprises:
• a rotatable actuator shaft (41), and
• at least one actuator vane (42), which is fixed to the actuator shaft (41) and moveably received in an internal space (43) of the hydraulic actuator (40), wherein the actuator vane (42) is configured to divide this internal space (43) into a first hydraulic chamber (44a) on a first side of the actuator vane and a second hydraulic chamber (44b) on an opposite second side of the actuator vane;
- **that** the actuator shaft (41) is connected to the cam shaft (30) in order to allow transmission of torque from the actuator shaft (41) to the cam shaft (30); and
- **that** the cam shaft (30) is rotatable together with the actuator shaft (41) and the actuator vane (42) in said first rotary direction (D1) by feeding of hydraulic fluid into the first hydraulic chamber (44a) and in said second rotary direction (D2) by feeding of hydraulic fluid into the second hydraulic chamber (44b).

2. A clamping device according to claim 1, **characterized in that** the cam shaft (30) is configured to assume a self-locking rotary position in relation to the housing (2) when the drawbar (5) has been forced into the retracted locking position under the effect of the cam shaft (30) and the hydraulic actuator (40), so as to thereby keep the drawbar (5) in the retracted locking position.

3. A clamping device according to claim 1 or 2, **characterized in that** the axis of rotation (A1) of the actuator shaft (41) is aligned with the axis of rotation (A2) of the cam shaft (30).

4. A clamping device according to any of claims 1-3, **characterized in that** the actuator vane (42) projects in radial direction from the actuator shaft (41).

5. A clamping device according to any of claims 1-4, **characterized in:**
- **that** the hydraulic actuator (40) comprises a cylindrical cavity (46), which extends perpendicularly to the longitudinal axis (L) of the bore (3) and which is limited in radial direction outwards by a cylindrical wall (47), wherein said internal space (43) forms part of this cylindrical cavity (46);
- **that** the actuator shaft (41) is rotatably arranged in the cylindrical cavity (46) with its longitudinal axis coinciding with the centre axis (C3) of the cylindrical cavity (46);
- **that** a longitudinal outer edge (42a) of the actuator vane (42) is in contact with the cylindrical wall (47); and
- **that** said internal space (43) extends in the circumferential direction of the cylindrical cavity (46) between first and second chamber walls (49a, 49b), which are arranged inside the cylindrical cavity (46) and extend in the longitudinal direction thereof, wherein the first hydraulic chamber (44a) is limited in a circumferential direction of the cylindrical cavity (46) by the first chamber wall (49a) and the second hydraulic chamber (44b) is limited in a circumferential direction of the cylindrical cavity (46) by the second chamber wall (49b).

6. A clamping device according to claim 5, **characterized in that** said first and second chamber walls (49a, 49b) form part of an elongated partition element (50), preferably in the form of a solid body, which is mounted inside the cylindrical cavity (46) and extends along a part of the cylindrical cavity (46) in the longitudinal direction thereof, wherein this partition element (50) is fixed to the cylindrical wall (47).

7. A clamping device according to claim 6, **characterized in that** the partition element (50) is fixed to the cylindrical wall (47) by means of screws (51).

8. A clamping device according to any of claims 5-7, **characterized in:**
- **that** the actuator shaft (41) is provided with a first end piece (55a) formed as a radial protrusion at a first end (41a) of the actuator shaft facing the cam shaft (30) and a second end piece (55b) formed as a radial protrusion at an opposite second end (41b) of the actuator shaft, wherein the first and second hydraulic chambers (44a, 44b) are limited in a first axial direction by the first end piece (55a) and in an opposite second axial direction by the second end piece (55b);
- **that** the actuator vane (42) extends along the actuator shaft (41) between the first and second end pieces (55a, 55b); and
- **that** the actuator shaft (41) is rotatably mounted to the cylindrical wall (47) through the first and second end pieces (55a, 55b).

9. A clamping device according to claim 8, **characterized in that** each one of the first and second end pieces (55a, 55b) has a circular peripheral edge (56) arranged in fluid-tight contact with the cylindrical wall (47).

10. A clamping device according to claim 9, **characterized in that** a rotary seal (57) is provided between the peripheral edge (56) of each end piece (55a, 55b) and the cylindrical wall (47).

11. A clamping device according to any of claims 1-10, **characterized in that** the hydraulic actuator (40) comprises two or more such actuator vanes (42), wherein each actuator vane (42) is moveably received in a respective internal space (43) of the hydraulic actuator.

12. A clamping device according to any of claims 1-11, **characterized in that** the actuator shaft (41) and the cam shaft (30) are formed in one piece.

13. A clamping device according to any of claims 1-12, **characterized in that** the clamping device (1) comprises two such hydraulic actuators (40) arranged on opposite sides of the drawbar (5), wherein a first one of these hydraulic actuators is connected to the cam shaft (30) at a first end of the cam shaft and the other hydraulic actuator (40) is connected to the cam shaft (30) at an opposite second end of the cam shaft.

14. A clamping device according to any of claims 1-13, **characterized in that** said cam formation (31) comprises a first cam surface (35a) operable to move the drawbar (5) from the advanced releasing position to the retracted locking position in connection with a rotation of the cam shaft (30) in said first rotary direction (D1) and a second cam surface (35b) operable to move the drawbar (5) from the retracted locking position to the advanced releasing position in connection with a rotation of the cam shaft (30) in said second rotary direction (D2).

15. A clamping device according to claim 14, **characterized in:**
- **that** said aperture (14) has a first contact surface (15a) facing towards the front end of the drawbar (5) and a second contact surface (15b) facing towards an opposite rear end of the drawbar;
- **that** the first cam surface (35a) is configured to be pressed against said first contact surface (15a) in the aperture when the cam shaft (30) is rotated in said first rotary direction (D1), to thereby pull the drawbar (5) rearwards in the bore (3) from the advanced releasing position to the retracted locking position; and
- **that** the second cam surface (35b) is configured to be pressed against said second contact surface (15b) in the aperture when the cam shaft (30) is rotated in said second rotary direction (D2), to thereby push the drawbar (5) forwards in the bore (3) from the retracted locking position to the advanced releasing position.
